Europäisches Patentamt

European Patent Office

Office européen des brevets

(11) Numéro de publication: **0 283 760 B1**

(12) **FASCICULE DE BREVET EUROPEEN**

(45) Date de publication de fascicule du brevet:
**18.09.91**

(21) Numéro de dépôt: **88102882.3**

(22) Date de dépôt: **26.02.88**

(51) Int. Cl.⁵: **G04C 3/00**, G01V 9/04

(54) **Dispositif de détection du passage d'un organe mobile par une position de référence.**

(30) Priorité: **03.03.87 CH 797/87**

(43) Date de publication de la demande:
**28.09.88 Bulletin  88/39**

(45) Mention de la délivrance du brevet:
**18.09.91 Bulletin  91/38**

(84) Etats contractants désignés:
**DE FR GB**

(56) Documents cités:
**US-A- 4 420 263**
**US-A- 4 593 194**

**PATENT ABSTRACTS OF JAPAN, vol. 9, no. 217 (P-385)[1940], 4 septembre 1985; & JP-A-60 76 612 (MATSUSHITA DENKO K.K.) 01-05-1985**

(73) Titulaire: **ETA S.A. Fabriques d'Ebauches Schild-Rust-Strasse 17 CH-2540 Grenchen(OH)**

(72) Inventeur: **Triponez, André**

**CH-2516 Lamboing(CH)**

(74) Mandataire: **de Montmollin, Henri et al ICB Ingénieurs Conseils en Brevets SA Passage Max Meuron 6 CH-2001 Neuchâtel(CH)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention a pour objet un dispositif de détection du passage d'un organe mobile par une position de référence, comportant un capteur photo-électrique de détection réalisé dans une plaquette en matériau semi-conducteur et produisant un signal dépendant de son éclairement, des moyens pour produire un faisceau lumineux destiné à éclairer le capteur de détection, des moyens associés à l'organe mobile et disposés sur le trajet du faisceau lumineux pour modifier l'éclairement du capteur de détection de manière que cet éclairement prend une première valeur ou une deuxième valeur différente de cette première valeur selon que l'organe mobile occupe sa position de référence ou non, des moyens pour produire un signal de référence, et des moyens pour produire un signal de détection par comparaison du signal produit par le capteur de détection avec le signal de référence.

Un dispositif de ce genre est décrit par exemple dans le brevet US-A-4 420 263, dans un cas où il est utilisé pour détecter le passage d'une des aiguilles d'une pièce d'horlogerie par une position de référence, par exemple la position qui est occupée par l'aiguille des heures à midi et à minuit.

Le signal produit par ce dispositif est utilisé par un circuit qui compare périodiquement la position réelle de cette aiguille avec la position qu'elle devrait avoir et qui corrige cette position réelle si nécessaire. Ce circuit ne sera pas décrit ici.

Le dispositif de détection décrit par le brevet US-A-4 420 263 mentionné ci-dessus comporte un disque mobile relié mécaniquement à l'aiguille dont le passage par la position de référence doit être détecté. Ce disque tourne autour de son axe à la même vitesse moyenne que cette aiguille.

Ce dispositif comporte également une diode luminescente et un photo-transistor situés, dans une première forme d'exécution, de part et d'autre du disque. Ce dernier est opaque et il est percé d'un trou disposé de manière que la lumière émise par la diode luminescente n'atteigne le photo-transistor que lorsque l'aiguille est dans la position de référence.

Dans une autre forme d'exécution, également décrite dans le brevet US-A-4 420 263, la diode luminescente et le photo-transistor sont disposés du même côté du disque, et le dispositif comporte en outre un miroir fixe disposé en regard de cette diode et de ce transistor, de l'autre côté de ce disque. Le disque est également percé d'un trou, et lorsque l'aiguille occupe sa position de référence, la lumière émise par la diode luminescente atteint le photo-transistor après avoir été réfléchie par le miroir.

Dans le dispositif décrit par ce brevet US-A-4 420 263, le photo-transistor est relié au circuit qui utilise son signal par un circuit de mise en forme dont la nature et le fonctionnement ne sont pas précisés.

Il est cependant évident pour l'homme du métier qu'un tel circuit de mise en forme comporte un comparateur qui compare le signal fourni par le photo-transistor à un signal de référence et qui produit à sa sortie un signal logique "0" ou "1" selon le résultat de cette comparaison.

Selon les cas, le signal fourni par le photo-transistor est constitué par la tension présente aux bornes de ce photo-transistor ou aux bornes d'un composant branché en série avec lui, ou par le courant qui traverse ce photo-transistor. Le signal de référence est bien entendu de même nature que le signal fourni par le photo-transistor, c'est-à-dire qu'il est constitué soit par une tension de référence soit par un courant de référence.

Il est également bien connu de l'homme du métier que, selon les cas, la valeur du signal de référence est déterminée par les caractéristiques d'un ou de plusieurs composants du comparateur lui-même, par exemple par la tension de seuil d'un des transistors qu'il comporte, ou que ce signal de référence est fourni par une source adéquate, extérieure au comparateur. Dans tous les cas, la valeur du signal de référence est fixe.

Il est d'autre part bien connu que les caractéristiques des photo-transistors d'un type déterminé, notamment la valeur du signal qu'ils produisent dans des conditions d'emploi déterminées en fonction de l'intensité de la lumière qu'ils reçoivent, varient dans de grandes proportions d'un exemplaire à l'autre, ainsi que, pour chaque exemplaire, en fonction du temps. Il en est d'ailleurs de même pour n'importe quel genre de capteur photo-électrique.

Ces variations sont généralement tellement importantes qu'il est nécessaire de mesurer individuellement les caractéristiques de chaque capteur avant de le monter dans le dispositif de détection, afin de s'assurer que ce dispositif fonctionnera convenablement.

Une telle mesure individuelle des caractéristiques de ces capteurs coûte très cher. En outre, elle ne garantit même pas que le dispositif fonctionnera correctement pendant un temps assez long, puisque ces caractéristiques peuvent varier au cours du temps de manière importante et non prévisible.

Le but de la présente invention est de proposer un dispositif de détection du passage d'un organe mobile par une position de référence du même genre que celui qui a été décrit ci-dessus, mais qui fonctionne correctement quelles que soient les caractéristiques particulières du capteur photo-électrique, et quelles que soient les variations de ces caractéristiques en fonction du temps.

Ce but est atteint par le dispositif revendiqué, qui est caractérisé par le fait que les moyens pour produire un signal de référence comportent un capteur photo-électrique de référence réalisé dans la même plaquette que le capteur de détection et produisant pour un même éclairement sensiblement le même signal que le capteur de détection, et un circuit produisant le signal de référence avec une valeur égale à un multiple défini du signal produit par le capteur de référence, et par le fait que le capteur de référence, les moyens pour produire un faisceau lumineux et les moyens pour modifier l'éclairement du capteur de détection sont agencés de manière que le capteur de référence reçoive en permanence une fraction non nulle de la lumière produite par les moyens pour produire un faisceau lumineux.

L'invention va maintenant être décrite à l'aide du dessin dans lequel :

- la figure 1 est une vue en coupe partielle d'une pièce d'horlogerie comportant un dispositif selon l'invention;
- la figure 2 est un exemple de schéma de la partie électronique d'un dispositif selon l'invention; et
- la figure 3 représente schématiquement une caractéristique des capteurs photo-électriques utilisés dans un dispositif selon l'invention.

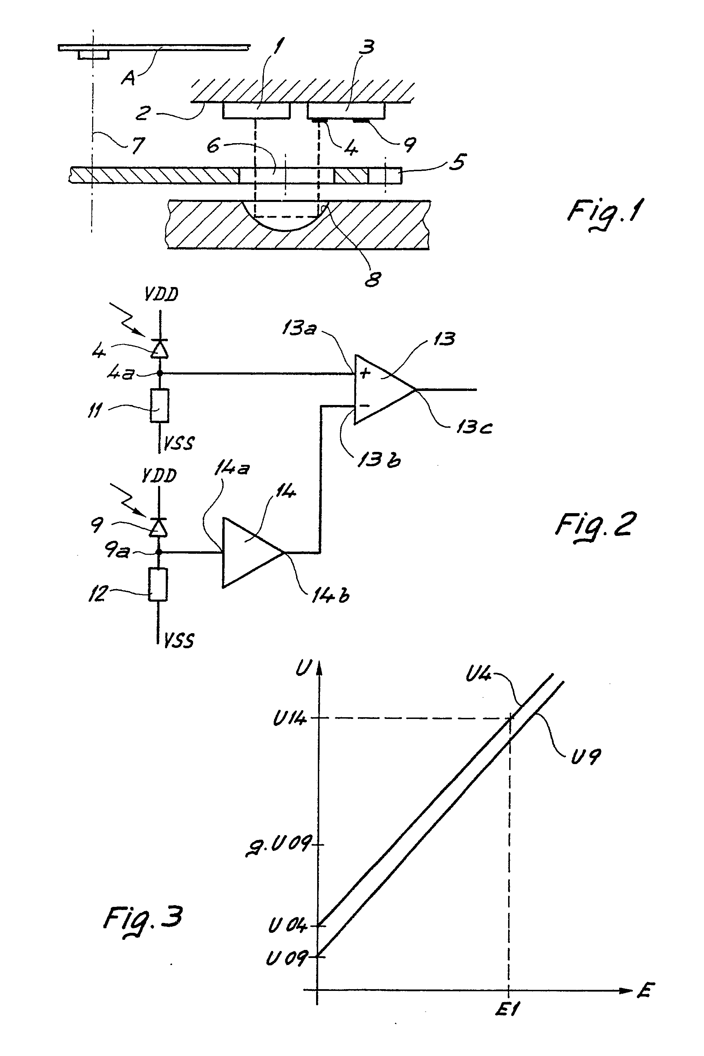

Le dispositif représenté à la figure 1 est utilisé pour détecter le passage d'une des aiguilles d'une pièce d'horlogerie par une position déterminée, ou position de référence, qui est par exemple la position occupée à midi et à minuit par l'aiguille des heures de cette pièce d'horlogerie. L'aiguille dont le passage par la position de référence est détecté par le dispositif de la figure 1 est désignée par la référence A.

Le dispositif de la figure 1 comporte une source de lumière 1 qui est, dans cet exemple, une diode électro-luminescente. Cette diode luminescente 1 est disposée sur un support 2 qui peut être la platine ou un pont de la pièce d'horlogerie, ou tout autre élément adéquat.

Le dispositif de la figure 1 comporte également une plaquette 3 en un matériau semi-conducteur tel que du silicium qui a été traitée par les techniques bien connues de fabrication des circuits intégrés de manière à former un capteur photo-électrique 4 dans une zone déterminée de sa surface.

Il faut noter que, en réalité et contrairement à ce qui a été représenté dans la figure 1 pour faciliter la description et pour mieux illustrer la position du capteur 4, ce dernier ne dépasse pas la surface de la plaquette 3.

Cette plaquette 3 est disposée dans cet exemple à côté de la diode luminescente 1, sur le même support 2.

Le dispositif de la figure 1 comporte en outre un élément opaque 5 percé d'une ouverture 6. Cet élément opaque 5 est constitué, dans cet exemple, par une roue dentée qui est la dernière roue du train d'engrenages, non représenté, entraînant l'aiguille A. Cette roue 5 est donc liée rigidement, d'une manière qui n'a pas non plus été représentée, à cette aiguille A et tourne donc autour de son axe 7, qui est évidemment confondu avec l'axe de rotation de cette aiguille A, à la même vitesse que cette dernière.

L'élément opaque 5 peut également être constitué par une roue dentée ne faisant pas directement partie du train d'engrenages entraînant l'aiguille A mais cependant entraînée par ce train d'engrenages. Dans ce dernier cas, la roue constituant l'élément opaque 5 peut être entraînée exactement et en permanence à la même vitesse angulaire que l'aiguille A. Cette roue peut également être entraînée par saccades à une vitesse variable qui n'est qu'en moyenne égale à la vitesse de rotation de l'aiguille A. Ces dernières formes d'exécution de l'élément opaque 5 et de sa liaison mécanique avec l'aiguille A n'ont pas été représentées.

Le dispositif de la figure 1 comporte encore un miroir 8 disposé en regard de la diode 1 et du capteur 4, de l'autre côté de la roue 5. Ce miroir 8 peut être une pièce indépendante montée à l'endroit voulu, ou être simplement formé dans un pont, par exemple, de la pièce d'horlogerie par une opération d'usinage adéquate.

La diode 1, le capteur 4, la roue 5, l'ouverture 6 et le miroir 8 sont disposés les uns par rapport aux autres de manière que le capteur 4 soit éclairé par la lumière émise par la diode 1 lorsque l'aiguille A occupe sa position de référence, cette lumière atteignant ce capteur 4 après avoir traversé l'ouverture 6 et avoir été réfléchie par le miroir 8, et de manière que ce capteur 4 ne soit pas éclairé lorsque l'aiguille A occupe n'importe quelle autre position, la roue 5 interrompant alors le faisceau lumineux émis par la diode 1.

Le dispositif de la figure 1 comporte en outre un deuxième capteur photo-électrique 9, qui a été réalisé au cours du même processus de fabrication que le capteur 4, dans une autre zone de la surface de la plaquette 3. Comme le capteur 4, le capteur 9 ne dépasse évidemment pas de la surface de la plaquette 3, contrairement à ce qui a été représenté à la figure 1 pour simplifier la description et pour illustrer la position de ce capteur 9.

Le capteur 9 est disposé sur la plaquette 3, et cette dernière est disposée sur le support 2, de manière que ce capteur 9 ne reçoive jamais de lumière, quelle que soit la position de l'aiguille A et donc de la roue 5.

Dans l'exemple de circuit électronique du dispositif de détection selon l'invention représenté à la figure 2, les capteurs photo-électriques 4 et 9 sont respectivement reliés en série avec deux résistances 11 et 12, et les ensembles ainsi constitués sont connectés entre les bornes positive VDD et négative VSS d'une source d'alimentation non représentée. Cette source alimente également, par des liaisons qui n'ont pas non plus été représentées, les autres éléments du circuit de la figure 2 qui vont être décrits ci-dessous.

Dans la suite de cette description, et selon la convention généralement adoptée, on appellera tension en un point du circuit la différence entre le potentiel de ce point et celui de la borne négative VSS mentionnée ci-dessus.

Le point de jonction 4a du capteur 4 et de la résistance 11 est relié à l'entrée non-inverseuse 13a d'un amplificateur différentiel 13. Le point de jonction 9a du capteur 9 et de la résistance 12 est relié à l'entrée 14a d'un amplificateur 14 dont la sortie 14b est reliée à l'entrée inverseuse 13b de l'amplificateur 13.

Les amplificateurs 13 et 14 mentionnés ci-dessus ne seront pas décrits en détail car ils sont bien connus. En outre, leur constitution exacte n'a pas de rapport direct avec la présente invention.

Il suffit de relever que, dans cet exemple, la sortie 13c de l'amplificateur 13 prend un premier ou un second état selon que la tension de l'entrée 13a est inférieure ou supérieure à celle de l'entrée 13b. Ces deux états sont, par exemple, ceux qui sont reconnus comme étant des états logiques "0" et "1" par le circuit qui est relié à la sortie 13c et qui est destiné à vérifier si l'aiguille A passe réellement par sa position de référence aux instants où elle doit le faire. Ce circuit n'a pas été représenté.

De même, l'amplificateur 14 est agencé de manière que son gain en tension g ait une valeur fixe et bien déterminée dont le choix sera décrit plus loin.

Les capteurs 4 et 9 étant réalisés sur la plaquette 3 par une des techniques bien connues de fabrication des circuits intégrés, il est évidemment avantageux de réaliser également les amplificateurs 13 et 14 et les résistances 11 et 12 sur cette plaquette 3, en même temps que ces capteurs 4 et 9. Les autres circuits électroniques de la pièce d'horlogerie, notamment le circuit, non représenté, qui est relié à la sortie 13c de l'amplificateur 13, peuvent être également réalisés sur cette plaquette 3.

Le fait que les capteurs 4 et 9 soient fabriqués en même temps et sur la même plaquette de matériau semi-conducteur a comme conséquences que leurs caractéristiques sont très voisines et que les variations de ces caractéristiques en fonction du temps sont très semblables.

La figure 3 représente schématiquement les tensions U4 et U9 mesurées aux points 4a et 9a du schéma de la figure 2 en fonction de l'éclairement E des capteurs 4 et 9. Ces mesures ont bien entendu été réalisées avant le montage de la plaquette 3 dans le dispositif de la figure 1 puisque, après ce montage, le capteur 9 ne reçoit plus de lumière et que l'éclairement du capteur 4 est soit nul soit égal à une valeur fixe déterminée par l'intensité de la lumière émise par la diode luminescente 1 et par la disposition relative des divers composants du dispositif. Cet éclairement du capteur 4 est désigné par la référence E1 dans la figure 3.

Les caractéristiques des capteurs 4 et 9 ne sont cependant pratiquement jamais identiques. Notamment les tensions U04 et U09 qui sont mesurées aux points 4a et 9a lorsque les deux capteurs 4 et 9 ne reçoivent aucune lumière sont généralement différentes, sans qu'il soit possible de savoir à l'avance laquelle des deux sera la plus élevée.

C'est la raison pour laquelle l'amplificateur 14 a été prévu. Le gain en tension g de cet amplificateur est choisi de manière que les deux conditions suivantes soient remplies:

Tout d'abord, ce gain g est choisi de manière que la tension fournie par la sortie 14b de cet amplificateur 14, qui est égale à g.U09, soit certainement supérieure à la tension U04.

En outre, ce gain g est choisi de manière que cette tension g.U09 soit certainement inférieure à la tension U14 présente au point 4a lorsque l'éclairement du capteur 4 est égal à E1, c'est-à-dire lorsque l'aiguille A se trouve à sa position de référence et que ce capteur 4 est éclairé par la lumière émise par la diode luminescente 1.

En pratique, on constate généralement que ces deux conditions sont remplies si la valeur de ce gain g de l'amplificateur 14 est comprise entre environ 2 et environ 10. Le choix de la valeur exacte de ce gain g est donc assez libre.

Le fonctionnement du dispositif de détection représenté par les figures 1 et 2 se déduit aisément de ces figures et des explications données ci-dessus.

Le signal fourni par le détecteur 4, qui est constitué dans cet exemple par la tension présente au point 4a, est comparé en permanence par l'amplificateur 13 à un signal de référence qui est constitué, toujours dans cet exemple, par la tension g.U09 fournie par la sortie de l'amplificateur 14.

Lorsque l'aiguille A occupe une position différente de sa position de référence, le faisceau lumineux émis par la diode luminescente 1 est interrompu par la roue 5 et le capteur 4 ne reçoit pas de lumière. La tension au point 4a est donc inférieure à la tension de référence, et la sortie 13c de l'amplificateur 13 est à l'état logique "0".

Lorsque l'aiguille A occupe sa position de référence, le capteur 4 est éclairé par la lumière émise par la diode luminescente 1 qui peut alors traverser l'ouverture 6. La tension au point 4a est donc supérieure à la tension de référence, et la sortie 13c de l'amplificateur 13 est à l'état logique "1".

Le signal fourni par la sortie 13c de l'amplificateur 13 constitue donc un signal de détection du passage de l'aiguille A par sa position de référence puisqu'il prend l'état logique "1" ou "0" selon que cette aiguille occupe cette position de référence ou une autre position.

Le fait que les capteurs 4 et 9 sont réalisés en même temps et sur la même plaquette de matériau semi-conducteur, et que leurs caractéristiques sont donc très proches et varient pratiquement de la même manière en fonction du temps, a comme conséquence que la tension au point 4a est certainement toujours nettement inférieure ou nettement supérieure à la tension de référence qui est un multiple bien défini de la tension au point 9a, indépendamment des caractéristiques particulières des capteurs 4 et 9 et des variations de ces caractéristiques en fonction du temps.

L'amplificateur 13 peut donc effectuer la comparaison entre la tension fournie par le capteur 4 et la tension de référence avec sécurité, et le signal de détection fourni par la sortie 13c de cet amplificateur 13 indique toujours exactement si l'aiguille A occupe sa position de référence ou non.

L'obligation de mesurer individuellement les capteurs destinés à être utilisés dans les dispositifs de détection connus disparaît donc, ce qui diminue considérablement le prix de revient d'un dispositif selon l'invention et augmente également la durée pendant laquelle ce dispositif fonctionne correctement.

Il est évident que la présente invention n'est pas limitée au cas décrit ci-dessus où les signaux fournis par les capteurs 4 et 9 sont respectivement constitués par les tensions présentes aux points la et 9a, mais qu'elle s'étend également aux cas où les signaux fournis par ces capteurs 4 et 9 ont une nature différente et sont constitués, par exemple, par les courants circulant dans ces capteurs 4 et 9. Dans de tels cas, l'amplificateur 14 est bien entendu conçu de manière que le signal de référence qu'il fournit est un courant de référence égal à un multiple bien défini du courant circulant dans le capteur 9, et l'amplificateur 13 est conçu de manière à comparer le courant circulant dans le capteur 4 avec ce courant de référence et à fournir le signal de détection mentionné ci-dessus en dépendance du résultat de cette comparaison.

Un tel dispositif de détection n'a pas été représenté car sa réalisation est à la portée de l'homme du métier.

Le fait que les capteurs 4 et 9 sont fabriqués sur une plaquette de matériau semi-conducteur a également comme conséquence que le signal qu'ils fournissent lorsqu'ils ne reçoivent aucune lumière peut être extrêmement faible, voire même pratiquement nul.

Dans ces conditions, il serait possible que le dispositif selon l'invention ne fonctionne pas correctement, car la valeur du signal de référence serait alors également très faible et pourrait ne pas être nettement supérieure, ou pourrait même être inférieure, à la valeur du signal fourni par le capteur 4 lorsque ce dernier ne reçoit pas de lumière.

Pour éviter cet inconvénient, il suffit de concevoir et de disposer les éléments du dispositif selon l'invention de manière que le capteur 9 reçoive en permanence une faible quantité de lumière, et que le signal qu'il fournit ne soit donc jamais nul. Le signal de référence produit par l'amplificateur 14 a ainsi toujours une valeur suffisante pour que l'amplificateur 13 puisse effectuer avec sécurité la comparaison du signal fourni par le capteur 4 avec ce signal de référence.

Parmi les diverses mesures qui peuvent être prises pour que le capteur 9 reçoive en permanence une certaine quantité de lumière, on peut mentionner à titre d'exemple non limitatif celle qui consiste à réaliser la roue 5 de manière que sa surface qui est tournée vers la diode luminescente 1 et vers les capteurs 4 et 9 soit dépolie et provoque une diffusion, notamment en direction des capteurs 4 et 9, d'une partie de la lumière émise par la diode 1.

De nombreuses modifications peuvent être apportées au dispositif décrit ci-dessus sans pour autant que celui-ci sorte du domaine de l'invention.

Ainsi, par exemple, il est possible de disposer un miroir semblable au miroir 8 de la figure 1 sur la roue 5, à l'emplacement occupé, dans cette figure 1, par l'ouverture 6. Dans ce cas, la roue 5 peut évidemment être indifféremment opaque ou transparente.

Toujours par exemple, il est également possible de disposer la plaquette 3 de l'autre côté de la roue 5 par rapport à la diode luminescente 1, de manière que la lumière émise par cette dernière atteigne le capteur 4 lorsque l'ouverture 6 ménagée dans la roue 5 est située entre cette diode 1 et ce capteur 4.

Dans cette forme d'exécution, les divers éléments du dispositif doivent bien entendu être disposés les uns par rapport aux autres et/ou dimensionnés de manière que le capteur 9 ne reçoive aucune lumière, ou seulement une faible quantité de lumière, même lorsque le capteur 4 est éclairé par la lumière émise par la diode luminescente 1 et passant par l'ouverture 6 de la roue 5.

Toujours dans cette forme d'exécution, le miroir 8 de la figure 1 n'a plus d'utilité et il est donc supprimé.

Dans une autre forme d'exécution du dispositif selon l'invention, la roue 5 de la figure 1 est remplacée par un disque transparent tournant également à la même vitesse que l'aiguille A et comportant une zone opaque à l'emplacement de l'ouverture 6 ménagée dans cette roue 5. Dans cette forme d'exécution, le capteur 4 est évidemment éclairé par la lumière émise par la diode 1 tant que l'aiguille A occupe une position différente de sa position de référence, et il ne reçoit plus de lumière lorsque cette aiguille A occupe cette position de référence.

Ce disque transparent comportant une zone opaque peut d'ailleurs être remplacé par un simple doigt opaque tournant autour de l'axe 7 de la figure 1 et dont l'extrémité opposée à cet axe 7 interrompt le faisceau lumineux produit par la diode 1 lorsque l'aiguille A occupe sa position de référence.

Il est évident que dans cette forme d'exécution, la diode luminescente 1 et la plaquette 3 peuvent soit être disposées en regard l'une de l'autre, de part et d'autre du disque transparent ou du doigt opaque mentionnés ci-dessus, soit être disposées du même côté de ce disque ou de ce doigt. Dans ce dernier cas, le dispositif comporte évidemment un miroir semblable au miroir 8 de la figure 1.

Toujours dans cette forme d'exécution, et quelle que soit la position relative de la diode luminescente 1 et de la plaquette 3, il peut être difficile de disposer et de dimensionner les divers éléments du dispositif de manière que le capteur 9 ne reçoive jamais aucune lumière, ou seulement une faible quantité de lumière.

Pour résoudre ce problème, on peut disposer et dimensionner les divers éléments du dispositif de manière que, au contraire, le capteur 9 reçoive en permanence une quantité de lumière équivalente à celle que reçoit le capteur 4 lorsqu'il est éclairé par la diode luminescente 1. Il suffit alors de remplacer l'amplificateur 14 du schéma de la figure 2 par un autre circuit agencé de manière que le signal de référence mentionné ci-dessus ait une valeur égale à une fraction déterminée de la valeur du signal fourni par le capteur 9. Cet autre circuit peut être simplement un diviseur de tension, ou un amplificateur dont le gain est inférieur à 1.

Le fonctionnement de cette forme d'exécution du dispositif selon l'invention ne sera pas décrit, car il se déduit facilement des explications données ci-dessus en liaison avec les figures 1 à 3.

L'utilisation d'un dispositif tel que celui dont diverses formes d'exécution viennent d'être décrites n'est pas limitée à la détection du passage par une position de référence d'une aiguille d'une pièce d'horlogerie.

Le dispositif selon l'invention peut également être avantageusement utilisé dans n'importe lequel des nombreux appareils comportant un organe mobile qui est un organe d'affichage, tel qu'une aiguille, dont la position par rapport à un cadran fixe dépend de la valeur d'une grandeur physique. On peut citer à titre d'exemple non limitatif de tels appareils les voltmètres, les ampèremètres, les débitmètres, etc. Le dispositif selon l'invention peut également être utilisé dans des appareils dans lesquels l'organe mobile n'a pas de fonction d'affichage. Parmi ces appareils, on peut citer, toujours à titre d'exemple non limitatif, ceux qui comportent un organe mobile constitué par un ressort bilame plongé dans un fluide et qui se déforme en fonction de la température de ce fluide.

Dans tous ces appareils, le signal produit par le dispositif lorsque l'organe mobile occupe une position de référence déterminée peut être utilisé à de nombreuses fins telles que, par exemple, le déclenchement d'une alarme ou d'une opération particulière dans un processus de fabrication ou autre.

**Revendications**

1. Dispositif de détection du passage d'un organe mobile (A) par une position de référence, comportant un capteur photo-électrique de détection (4) réalisé dans une plaquette (3) en matériau semi-conducteur et produisant un signal dépendant de son éclairement, des moyens (1) pour produire un faisceau lumineux destiné à éclairer ledit capteur de détection (4), des moyens (5, 6) associés audit organe mobile (A) et disposés sur le trajet dudit faisceau lumineux pour modifier l'éclairement dudit capteur de détection (4) de manière que cet éclairement prend une première valeur ou une deuxième valeur différente de ladite première valeur selon que ledit organe mobile (A) occupe ladite position de référence ou non, des moyens (9, 12, 14) pour produire un signal de référence, et des moyens (13) pour produire un signal de détection par comparaison dudit signal produit par le capteur de détection (4) avec ledit signal de référence, caractérisé par le fait que lesdits moyens (9, 12, 14) pour produire un signal de référence comportent un capteur photo-électrique de référence (9) réalisé dans la même plaquette (3) que ledit capteur de détection (4) et produisant pour un même éclairement sensiblement le même signal que ledit capteur de détection (4), et un circuit (14) produisant ledit signal de référence avec une valeur égale à un multiple défini du signal produit par ledit capteur de référence (9), et par le fait que ledit capteur de référence (9), lesdits moyens (1) pour produire un faisceau lumineux et lesdits moyens(5,6) pour modifier l'éclairement du capteur de détection (4) sont agencés de manière que ledit capteur de référence (9) reçoive en permanence une fraction non nulle de la lumière produite par lesdits moyens (1) pour produire un faisceau lumineux.

2. Dispositif de détection selon la revendication 1, caractérisé par le fait que lesdits moyens (5, 6) pour modifier l'éclairement du capteur de détection (4) comportent un élément opaque (5) lié mécaniquement audit organe mobile (A) et disposé de manière à interrompre ledit faisceau lumineux lorsque ledit organe mobile (A) occupe une position différente de ladite position de référence, et une ouverture (6) ménagée dans ledit élément opaque (5) pour laisser passer ledit faisceau lumineux lorsque ledit organe mobile (A) occupe ladite position de référence.

3. Dispositif de détection selon l'une des revendications 1 et 2, caractérisé par le fait que ledit organe mobile (A) est un organe d'affichage d'une pièce d'horlogerie, et que lesdits moyens (5, 6) pour modifier l'éclairement dudit capteur de détection (4) comportent une roue opaque (5) reliée mécaniquement audit organe d'affichage (A) et disposée de manière a interrompre ledit faisceau lumineux lorsque ledit organe d'affichage (A) occupe une position différente de ladite position de référence, et une ouverture (6) ménagée dans ladite roue (5) de manière à laisser passer ledit faisceau lumineux lorsque ledit organe d'affichage (A) occupe ladite position de référence.

**Claims**

1. Device for detecting the passage of a moving organ (A) in a reference position, comprising a photo-electric detection sensor (4) made in a plate (3) of semi-conductor material and producing a signal dependent on its illumination, means (I) for producing a light beam intended to illuminate said detection sensor (4), means (5, 6) associated with said moving organ (A) and disposed in the path of said light beam for modifying the illumination of said detection sensor (4) so that this illumination takes a first value or a second value different from said first value when said moving organ (A) is in said reference position or not, means (9, 12, 14) for producing a reference signal, and means (13) for producing a detection signal by comparing said signal produced by said detection sensor (4) with said reference signal, characterized by the fact that said means (9, 12, 14) for producing a reference signal comprise a photo-electric reference sensor (9) made in the same plate (3) as said detection sensor (4) and producing with the same illumination a signal substantially identical to that produced by said detection sensor (4), and a circuit (14) for producing said reference signal with a value equal to a set multiple of the signal produced by said reference sensor (9), and by the fact that said reference sensor (9), said light beam producing means (1) and said means (5, 6) for modifying the illumination of said detection sensor (4) are so arranged that said reference sensor (9) permanently receives a fraction different from zero of the light produced by said means for producing a light beam (1).

2. Device according to claim 1, characterized by the fact that said means (5, 6) for modifying the illumination of the detection sensor (4) comprise an opaque element (5) mechanically linked to said moving organ (A) and so disposed as to interrupt said light beam when said moving organ (A) is in a position other than said reference position, and an opening (6) in said opaque element (5) to allow said light beam to travel therethrough when said moving organ (A) is in said reference position.

3. Device according to one of claims 1 and 2, characterized by the fact that said moving organ (A) is a display organ of a timepiece, and that said means (5, 6) for modifying the illumination of said detection sensor (4) comprise an opaque wheel (5) mechanically connected to said moving organ (A) and so disposed as to interrupt said light beam when said moving organ (A) is in a position other than said reference position, and an opening (6) in said wheel (5) to allow said light beam to travel therethrough when said moving organ (A) is in said reference position.

**Patentansprüche**

1. Vorrichtung zum Erfassen des Durchgangs eines beweglichen Organs (A) durch eine Referenzposition, umfassend einen in einem Halbleiterplättchen (3) realisierten fotoelektrischen Erfassungsfühler (4) zum Erzeugen eines von seiner Belichtung abhängenden Signals, Mittel (1) zum Erzeugen eines zum Belichten des Erfassungsfühlers (4) bestimmten Lichtstrahls, dem beweglichen Organ (A) zugeordnete und in der Bahn des Lichtstrahls angeordnete Mittel (5, 6) zum Verändern der Belichtung des Erfassungsfühlers (4) derart, daß diese Belichtung einen ersten oder einen zweiten, vom ersten abweichenden Wert annimmt je nachdem, ob das bewegliche Organ (A) die Referenzposition einnimmt oder nicht, Mittel (9, 12, 14) zum Erzeugen eines Referenzsignals, und Mittel (13) zum Erzeugen eines Erfassungssignals durch Vergleich des vom Fühler-Detektor (4) erzeugten Signals mit dem Referenzsignal, dadurch gekennzeichnet, daß die Mittel (9, 12, 14) zum Erzeugen eines Referenzsignals einen fotoelektrischen in demselben Plättchen (3) wie der Erfassungsfühler (4) realisierten Referenz-Fühler (9) umfassen, der für eine gleiche Belichtung im wesentlichen das gleiche Signal wie der Erfassungsfühler (4) erzeugt, sowie eine Schaltung (14) umfassen, die das Referenzsignal mit einem Wert gleich einem definierten Vielfachen des von dem Referenz-Fühler (9) erzeugten Signals erzeugt, und daß der Referenz-Fühler (9), die Lichtstrahlerzeugungsmittel (1) und die Belichtungsänderungsmittel (5,6) des Erfassungsfühlers (4) derart ausgebildet sind, daß der Referenz-Fühler (9) permanent einen von Null verschiedenen Bruchteil des von den Lichtstrahlerzeugungsmitteln (1) erzeugten Lichtes empfängt.

2. Erfassungsvorrichtung nach Anspruch 1, dadurch gekennzeichnet, daß die Belichtungsveränderungsmittel (5, 6) des Erfassungsfühlers (4) ein mechanisch mit dem beweglichen Organ (A) verbundenes opakes Element (5) derart angeordnet umfassen, daß der Lichtstrahl unterbrochen wird, wenn das bewegliche Organ (A) eine von der Referenzposition abweichende Position einnimmt, sowie eine in das opake Element (5) eingearbeitete Öffnung (6) umfassen für den Durchlaß des Lichtstrahls, wenn das bewegliche Organ (A) die Referenzposition einnimmt.

3. Erfassungsvorrichtung nach einem der Ansprüche 1 und 2, dadurch gekennzeichnet, daß das bewegliche Organ (A) ein Anzeigeorgan einer Uhr ist und daß die Belichtungsveränderungsmittel (5, 6) des Erfassungsfühlers (4) ein mechanisch mit dem Anzeigeorgan (A) verbundenes opakes Rad (5) derart angeordnet umfassen, daß der Lichtstrahl unterbrochen wird, wenn das Anzeigeorgan eine von der Referenzposition abweichende Position einnimmt, und eine in das Rad (5) eingearbeitete Öffnung (6) umfassen für den Durchlaß des Lichtstrahls, wenn das Anzeigeorgan (A) die Referenzposition einnimmt.

Fig.1

Fig.2

Fig.3